**Europäisches Patentamt**

**European Patent Office**

**Office européen des brevets**

(19)

(11) Publication number: **0 040 133**
**A2**

(12)

# EUROPEAN PATENT APPLICATION

(21) Application number: **81400692.0**

(22) Date of filing: **30.04.81**

(51) Int. Cl.³: **B 01 D 27/08**

(30) Priority: **08.05.80 US 147979**

(43) Date of publication of application:
**18.11.81 Bulletin 81/46**

(84) Designated Contracting States:
**DE FR GB IT NL SE**

(71) Applicant: **FRAM CORPORATION**
**105 Pawtucket Avenue**
**East Providence Rhode Island 02916(US)**

(72) Inventor: **Thornton, Donald Irving**
**64 Kalmer Road**
**Warwick, Rhode Island 02886(US)**

(74) Representative: **Brullé, Jean et al,**
**Service Brevets Bendix 44, rue François 1er**
**F-75008 Paris(FR)**

(54) **Replaceable cartridge filter assembly.**

(57) A filter assembly with a replaceable filter element (17) in an open-ended filter cannister (12) the open end of which is slideable over and sealable with a projecting part (16) of a base structure of the assembly to enclose the filter element, characterized by the base structure carrying a plurality of jaw elements (80) spaced around the said part, said jaw elements being concommitantly laterally displaceable by a rotary member (70) adapted to effect a cam action in relation to said element and thereby enable them to retain or release the cannister.

./...

EP 0 040 133 A2

FIG. I

Replaceable  Cartridge Filter Assembly.   **0040133**

This invention relates to replaceable cartridge filter assemblies and relates especially but not exclusively to replaceable oil filter assemblies for vehicle engine.

In many vehicle engines with replaceable filter elements, either the filter cannister as well as the enclosed filter element is disposeable and replaceable at periodic maintenance times or alternatively, the filter element is contained within a cannister which is retained as a permanent part of the installation and only the filter element itself is replaced.  One such assembly is disclosed in United States Patent No. 3,490,594 and reference to that Specification enables one to observe that special tools are required to remove the cannister from a base structure for replacement purposes.

The present invention seeks to provide an oil filter assembly in which the filter cannister may be quickly and easily removed from the base assembly by a vehicle operator without the use of specialised tools.

According to the invention, there is provided a filter assembly with a replaceable filter element in an open-ended filter cannister, the open end of which is slideable over and sealable with a  projecting part of a base structure of the assembly to enclose the filter element, characterised by the base structure carrying a purality of jaw elements spaced around the said projecting part, said jaw elements being concommictantly laterally displaceable by a rotary actuator member adapted to effect a cam action in relation to said members and thereby enable them to retain or release the cannister.

In order that the invention may be more fully understood, invention will be further described by way of example with reference to the accompanying drawings of which

Fig. 1 is a sectional view of a filter assembly embodying invention and

Fig. 2 is an isolated view from above of the base structure of the assembly in the direction of the Arrow of Fig. 1

Fig. 3 is an isolated top view of a cam ring employed in the base structure of Fig. 1 and seen in the direction of Arrow A and

Fig. 4 is an isolated top view of the jaw elements employed in the assembly of Fig. 1 also seen in the direction of Arrow A of Fig. 1.

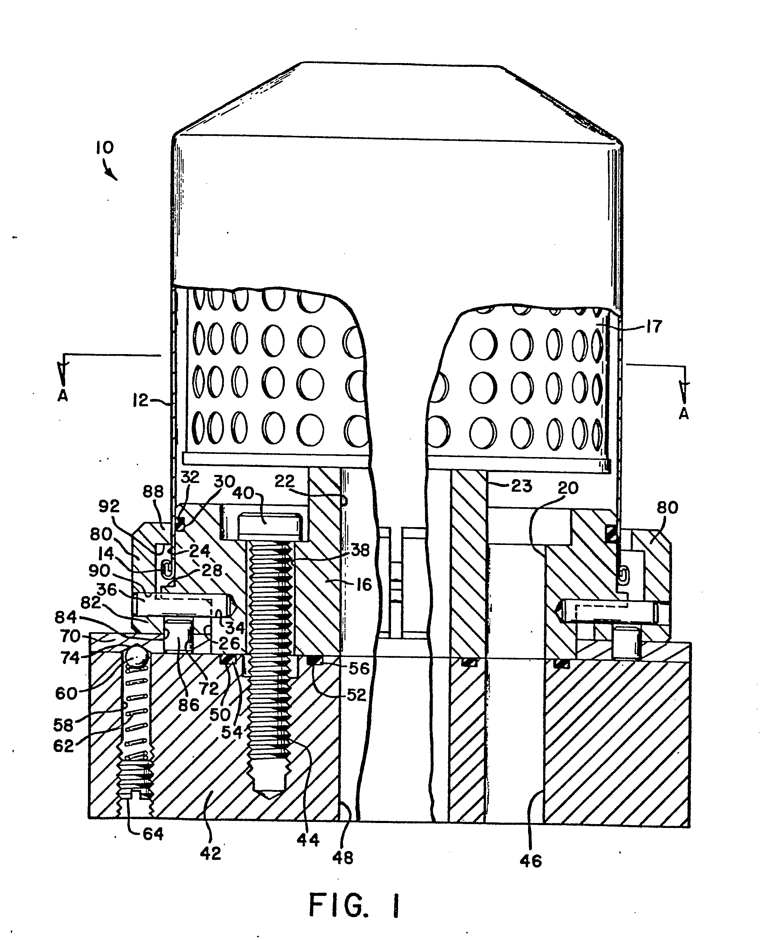

Referring to Fig. 1, the filter assembly 10 includes a generally cylindrical cannister 12 which is closed at the upper end and open at the lower end, the lower end being provided with a rolled shoulder 14 for mounting over a generally cylindrical projecting part 16 of a base structure to enclose a replaceable filter element 17 within the cannister. The part 16 includes a pair of inlet passages 18 and 20 of which only the inlet passage 20 is visible in the view of Fig. 1 which is provided in the drawing. The part 16 also includes an outlet passage 22. The surface 23 of the projecting part 16 co-operates with the filter elements 17 so that oil flowing from inlets 18 and 20 to outlet 22 must pass through the filter element 17. Furthermore, the part 16 includes a large diameter portion 24 separated from a smaller diameter portion 26 by a flange 28. An annular groove 30 in the portion 24 provides for the retention of an O-ring 32 which provides a seal between the open end of the cannister 12 and the base part 16. Six equally spaced radial bores 34 are provided for receiving press-fitted guide pins 36 which extends radially into the base part 16. Three mounting bores 38 also extend axially to the base part 16. Three equally spaced mounting bolts 40 are also provided as shown extending through the mounting bores 38 to bolt the part 16 to a supporting member 42, the member 42 being suitably provided with tap threads for this purpose.

Support member 42 maybe either fixed to or a part of a vehicle engine block which is not shown and it is provided with a pair of inlets 46 of which only one is visible in Fig. 1 but which communicates oil from the engine block to the filter element 17 via inlet passages 18 and 20. An outlet passage 48 communicates oil from the filter element 17 back to the engine block via the base outlet passage 22. Filter element 17 is of generally known construction and such that fluid entering via inlets 18 and 20 passes through the filter 17 in order to reach the outlet 22. The supporting member 42 also includes a pair of annular slots 50 and 52 which contain O-ring seals 54 and 56 which prevent oil leakage from between the support member 42 and the base member 16. Support member 42 also includes a partially threaded axially bore 58 which houses a ball 60 urged upwardly by a spring 62 compressed by an adjustable screw 64.

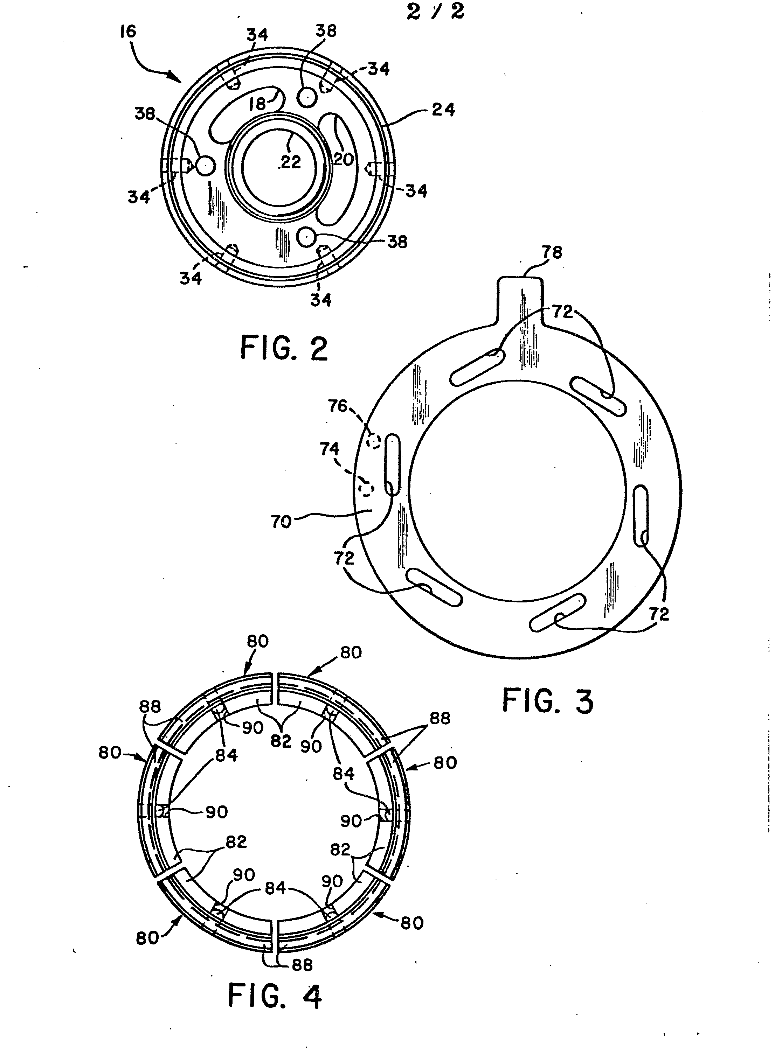

In the locked position shown, the ball 60 engages with a recess 74 to hold the ring 70 locked against such movement as might occur as a result of vibration. The annular cam ring 70 rests against the supporting member 42 and is coaxially rotatable around the smaller diameter portion 26 of the base part 16. Six equally spaced oblong cam slots 72 extend axially through the cam ring 70 as clearly seen in Fig. 3 where the identations 74 and 76 and a manually accessible actuating tab 78 are also clearly visible.

Six arcuate jaw elements 80 fit coaxially and end to end around the base diameter 16, each jaw element 80 including a base portion 82 with an axial for 84 which receives a press fitted cam-pin 86. These cam pins 86 are slideably received by the above mentioned cam slots 72 of the cam ring 70. Each jaw element 80 also includes an axial bore 90 which slideably receives a corresponding one of guide pins 36. A downward facing abutment surface 92 of each jaw element is provided to co-operate with the shoulder 14 of the cannister 12 to positively prevent the removal of the cannister 12 from the projecting part 16 when the jaw elements 80 are in an inwardly disposed position.

Although not regarded as an essential feature of the invention, a suitable bearing material such as "Teflon" maybe used as a coating on the sliding surfaces of 42, 16, 70 and jaw elements 80.

In operation of the filter assembly as described above, the cannister is mounted to the assembly by pressing it downwards over the projecting part 16 until the shoulder 14 thereof moves pass the surfaces 92 on the underside of the engaging portion 88 of the jaw elements 80. The cannister 12 may then be locked to the assembly by rotating the cam ring 70 by means of the tab 78 in a clock-wise direction viewed in the direction of para. A for Fig. 1. Such rotation of the cam ring 70 and co-operation of cam pins 86 and cam slots 72 drives the pins 86 and jaw element 80 inwardly along the respective guide pins 36 into the locked position wherein the portions 88 of jaw elements 80 come into radial compression against the outer surface of 12 thereby tending to create radial compression thereon between the jaw elements and the projecting part 16 carrying O-ring seal 32. In such an inward locked position which is the position shown in Fig. 1 the shoulder 14 and the abutment surfaces 92 co-operate to prevent the move of the cannister 12 from the base part 16. Also, in this position, the ball 60 is positively received by 74 which therefore constitutes a detent to prevent the cam ring inadvertently moving from the locked position.

When it is desired to replace the filter element 17 , the cam ring 70 is rotated in an anti-clockwise direction viewed in the direction of the arrow A, to drive the cam pins 86 and jaw elements 80 radially outwards towards a position such as shown by draughtsmen licence on the right hand side of Fig. 1. In this position, the detent 76 receives the ball 60 and the cam ring is held in a position whereby the portions 88 of the jaw elements 80 are sufficiently separated from the cylindrical cannister to permit the latter to be removed from the base plant 16 and replacement of the filter element can thereby be achieved without the use of special tools to remove the cannister.

CLAIMS                                              **0040133**

1.   A filter assembly with a replaceable filter element (17) in an open-ended filter cannister (12) the open end of which is slideable over and sealable with a projecting part (16) of a base structure of the assembly to enclose the filter element, characterised by the base structure carrying a plurality of jaw elements (80) spaced around the said part, said jaw elements being concommitantly laterally displaceable by a rotary member (70) adapted to effect a cam action in relation to said element and thereby enable them to retain or release the cannister.

2.   A filter assembly as claimed in claim 1, characterised by the jaw element being provided with inward projecting portion (88) cooperable with an outward projection (14) of the cannister extending at least partially around the cannister in the vicinity of the open end thereof.

3.   A filter assembly as claimed in claim 2, characterised by the outward projection (14) having a shoulder and each jaw element (80) having a recess for receiving such a shoulder and an abutment surface (92) adjacent the recess the abutment surface and the shoulder cooperating to prevent removal of the cannister from the assembly when the jaws are in a locking position.

4.   A filter assembly as claimed in claim 1, 2 or 3 characterised by the projecting part (16) being generally circular to receive a generally circular cannister and each of the jaw elements having a bore receiving a respective one of a plurality of radical guide pins (36) carried by the said projecting part,

BAD ORIGINAL

the jaw elements also having cam engaging portions (86) engageable with cam surfaces (72) of the rotary actuator 0040133 member (70) to provide for concommitant radial movement of the jaw elements (80).

5.   A filter assembly as claimed in claim 4, characterised by the rotary member (70) being a generally annular platelike member.

6.   A filter assembly as claimed in claim 5, characterised by the cam engaging portions (86) comprising projections extending from the jaws longitudinally in relation to the assembly to engage in respective cam-slots (72) in the actuator member.

7.   A filter assembly as claimed in any preceeding claim characterised in that the projecting part (16) has an outer surface engageable with an inner surface of the cannister (12), the jaw elements (80) and the projecting parts (16 cooperating to hold the cannister there between under radial compression when the jaw elements (80) are in an inward and locked position.

8.   A filter assembly as claimed in any of claims 1 to 7 characterised by the rotary member (70) having means (60, 62, 64, 74) for positively holding it in a locked position against inadvertent movement.

9.   A filter assembly as claimed in claim 8 characterised by said means comprising a spring loaded member (60 and a recess (74).

10.   A filter assembly substantially as described with reference to the accompanying Fig. 1 and Figs 2 to 4 of the drawings,

FIG. 1

0040133

2 / 2

FIG. 2

FIG. 3

FIG. 4